# EUROPÄISCHE PATENTANMELDUNG

(11) **EP 0 773 145 A2**
(43) Veröffentlichungstag der Anmeldung: **14.05.1997**
(21) Anmeldenummer: 96117586.6
(22) Anmeldetag: 02.11.1996
(51) Int. Cl.: B60R 21/26

(54) **Anordnung zum mehrstufigen Zünden von Gasgeneratoren**

(30) Priorität: 08.11.1995 DE 19541584
(71) Anmelder: TEMIC Bayern-Chemie Airbag GmbH, D-84544 Aschau (DE)
(72) Erfinder: Fürst, Franz, 84453 Mühldorf (DE); Maier, Lothar, 84577 Tüssling (DE); Unterforsthuber, Karl, 82041 Oberhaching (DE)
(74) Vertreter: Maute, Hans-Jürgen, Dipl.-Ing.

(57) **Zusammenfassung**

Die Erfindung beschreibt eine Anordnung zum mehrstufigen Zünden von pyrotechnischen Gasgeneratoren, insbesondere für passive Rückhaltesysteme. Bisherige pyrotechnische Gasgeneratoren werden einstufig gezündet, d.h. es gibt nur einen Anzünder, der den gesamten im Generator befindlichen Treibstoff zündet. Erfindungsgemäß beinhaltet ein pyrotechnischer Gasgenerator mehrere voneinander unabhängige Anzünder und Treibstoffeinheiten, die unabhängig voneinander ausgelöst werden können. Dadurch kann der Gasgenerator ein- oder mehrstufig gezündet werden. Die Einstellung der gewünschten Gasmenge, des gewünschten Gasdruckes und der Aufblasgeschwindigkeit kann somit den Anforderungen entsprechend unmittelbar zum Zeitpunkt der Auslösung erfolgen. Mit dieser Erfindung können alle Personen in allen Positionen in der Fahrgastzelle unter allen Konditionen optimal geschützt werden. Eine Verletzungsgefahr wegen zu hoher oder zu niedriger Drücke wird ausgeschlossen.

## Beschreibung

**Die Erfindung betrifft** eine Anordnung zum mehrstufigen Zünden von Gasgeneratoren nach dem Oberbegriff der Patentanspruches 1, 6 oder 7.

Es sind Rückhaltesysteme für Fahrzeuginsassen bekannt, die mit einem Gassack (Airbag) ausgestattet sind, der durch ein, von einem im Gasgenerator erzeugten Gas aufgeblasen wird. Dabei sind im wesentlichen zwei Arten von Gasgeneratoren bekannt, die brennbaren, festen, gaserzeugenden Treibstoff zum Aufblasen des Airbags verwenden.

So sind einmal Gasgeneratoren bekannt, deren Brenn- und Filterkammer ringförmig um eine Anzündeinheit angeordnet sind. Im Zentrum eines derartigen Rundgasgenerators befindet sich die zylinderförmige Anzündkammer. Dort ist ein Anzünder montiert, der von außen durch einen elektrischen Impuls aktiviert wird und so die Initialzündung in Gang setzt. Die Anzündkammer ist durch Wandöffnungen mit der toroidförmigen Brennkammer verbunden in der sich der brennbare, gaserzeugende, feste Treibstoff befindet. Hier wird das eigentliche Gas erzeugt. Das Gas gelangt durch Verbindungskanäle in eine Filterkammer, die toroidförmigen die Brennkammer umschließt. In der Filterkammer wird das Gas abgekühlt und von Verunreinigungen gereinigt. Über die Austrittsöffnungen an der Außenwandung verläßt das Gas den Gasgenerator und wird dem Verbraucher zugeführt.

Zum anderen sind Gasgeneratoren mit einem zylindrischen Aufbau bekannt, bei dem ein langgestreckter Zylinder die Brennkammer darstellt und ein diesen Brennkammerzylinder umschließender Zylinder die Auslaßöffnungen aufweist. Im Inneren eines derartige Rohrgasgeneratoren befindet sich die zylinderförmige Anzündkammer.
Dort ist ein Anzünder montiert, der von außen durch einen elektrischen Impuls aktiviert wird und so die Initialzündung in Gang setzt. Die Anzündkammer ist durch Wandöffnungen mit der rohrförmigen Brennkammer verbunden in der sich der brennbare, gaserzeugende, feste Treibstoff befindet. Hier wird das eigentliche Gas erzeugt. Das Gas gelangt durch Verbindungskanäle in eine Filterkammer, die rohrförmig die Brennkammer umschließt. In der Filterkammer wird das Gas abgekühlt und von Verunreinigungen gereinigt. Über die Auslaßöffnungen an der Außenwandung verläßt das Gas den Gasgenerator und wird dem Verbraucher zugeführt.
Auch ist aus der EP 0 382 552 A2 ein Rohrgasgenerator bekannt der zwei Brennkammern mit je einer Anzündeinheit beinhaltet. Die zylinderförmige einteilige Außenwand an der sich die Ausströmöffnungen befinden, hat im Inneren eine kreisförmige Zwischenwand, die den Außenzylinder im Innern in zwei Kammern abtrennt. In jeder dieser Kammern befindet sich eine zylinderförmige Filtereinheit in der sich wiederum die zylinderförmige Brennkammer mit dem Treibstoff befindet. Im Innern der Brennkammer ist die zylinderförmige Anzündkammer mit der Anzündmischung. Die beiden offenen Enden der zylinderförmigen, zweikammerigen, einteiligen Außenwand werden an jeder Seite mit einem Deckel verschlossen. An den Deckeln ist je ein Anzünder derart angebracht, daß er in die Anzündkammer ragt.

**Nachteilig an diesen Anordnungen** ist jedoch, daß es beim Aufblasen des Gassackes nicht möglich ist die Menge, den Druck und die Geschwindigkeit zu beeinflussen und den jeweiligen Anforderungen anzupassen, wenn nur eine Treibstoffeinheit und ein Zünder vorhanden ist. Nachteilig an der Lösung aus der EP 0 382 552 A2 ist jedoch, daß die Herstellung der zylinderförmigen, zweikammerigen, einteiligen Außenwand sehr kostenintensiv ist und nur für Rohrgasgeneratoren realisierbar ist. Auch können bei diesem Verfahren nur maximal zwei Brennkammern ausgebildet werden, deren Größe nicht ohne erhöhten Fertigungsaufwand verändert werden kann.

**Der Erfindung liegt daher die Aufgabe zugrunde** eine Anordnung für einen Gasgenerator der eingangs genannten Art zu schaffen, die es erlaubt die Gaserzeugung und somit die Aufblasparameter den Anforderungen entsprechend, flexibel, kostengünstig und mit niedrigstem Fertigungsaufwand zu steuern.

**Diese Aufgabe wird erfindungsgemäß durch die kennzeichnenden Merkmale des Patentanspruches 1, 6 oder 7 gelöst.** Hiernach werden in einem pyrotechnischen Gasgenerator mindestens zwei unabhängige Treibstoffeinheiten mit jeweils einer eigenen Anzündeinrichtung in je einem geschlossenen, einlegbaren Behälter, oder in je einem Brennkammerbereich oder in je einer eigenständigen Brennkammern wovon jede eine unabhängige Außenwand mit den Abströmöffnungen aufweist, angeordnet.

Vorteilhafte Weiterbildungen der Erfindung ergeben sich aus den abhängigen Ansprüchen. Hierbei werden die Behälter bei Auslösung der gaserzeugenden Reaktion von Innen heraus geöffnet. Auch können diese Behälter einen sektorförmigen Querschnitt aufweisen. Beim Einlegen aller kuchenförmigen Behälter in die Brennkammer füllen diese die kreisförmige Brennkammer ganz aus. Auch können die Anzündeeinheiten und somit der jeweilige Treibstoff sowohl einzeln, zusammen oder zeitlich versetzt ausgelöst werden.

**Die mit der Erfindung erzielten Vorteile bestehen** insbesondere darin, daß sich mit der festgelegten Portionierung des Treibstoffes und dem variablen zeitlichen Zündversatz eine große Bandbreite von möglichen Gaserzeugungen realisieren läßt. Damit kann die Gasmenge, die Aufblasgeschwindigkeit und der Druck sowohl im Gassack als auch im Gasgenerator geregelt werden. Diese Parameter lassen sich nun auf die jeweiligen Anforderungen eingestellen. Außerdem ist es möglich, daß eine nicht gezündete Treibstoff-/Zündeinheit, welches ein abgeschlossenes Modul in einem unabhängigen, einlegbaren Behälter bildet, ohne Aufwand wiederverwendet werden kann. Auch kann durch mehrere voneinander unabhängige, gaserzeugende Reaktionen die Sicherheit, bei einer Fehlfunktion z.B. bei Nichtauslösung, erhöht werden, da dann eine andere gaserzeugende Reaktion aktiviert werden kann. Die erfindungsgemäßen Aufbauten sind kostengünstig, flexibel in der Mehrstufigkeit und fertigungstechnisch einfach zu realisieren.

Die **Ausführungsbeispiele** der Erfindung und ihre vorteilhaften Weiterbildungen werden im folgenden anhand mehrerer Zeichnungen dargestellt.
- **Figur 1:**: Erfindungsgemäßer pyrotechnischer Rundgasgenerator mit einlegbarem Behälter
- **Figur 2:**: Schnitt durch die Brennkammer eines erfindungsgemäßen pyrotechnischen Rundgasgenerator mit kuchenförmigen, einlegbaren Behältern
- **Figur 3:**: Erfindungsgemäßer pyrotechnischer Rundgasgenerator mit mehreren Brennkammerbereichen
- **Figur 4:**: Schnitt durch die Brennkammer, die durch radiale Zwischenwände mehrere unabhängige Brennkammerbereiche ausbildet
- **Figur 5:**: Erfindungsgemäßer pyrotechnischer Rohrgasgenerator mit mehreren Brennkammern, die pro Brennkammer eine eigene, unabhängige Wandung mit den Abströmöffnungen aufweist.

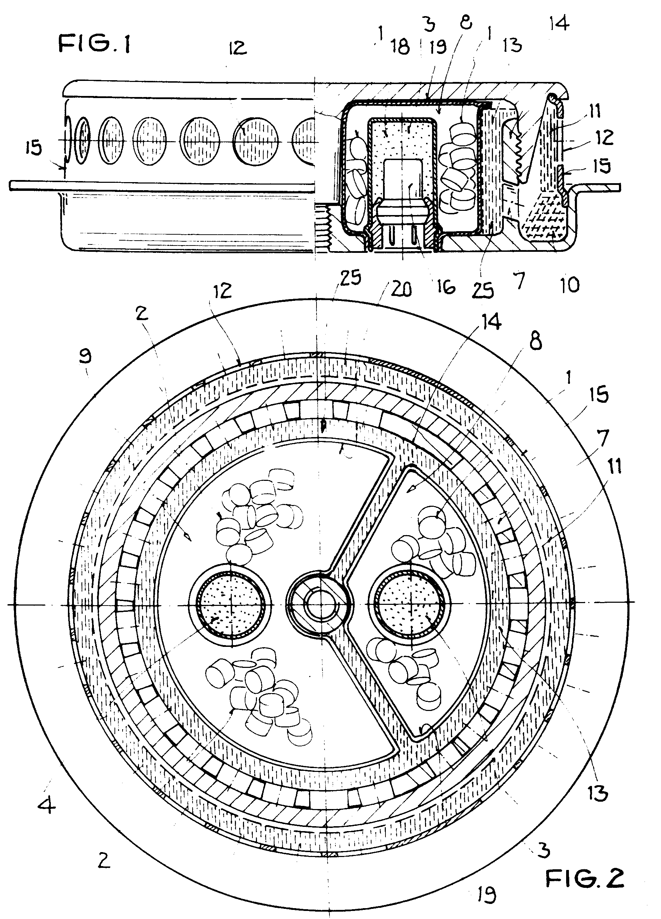

**Figur 1** zeigt einen erfindungsgemäßen pyrotechnischen Rundgasgenerator mit einlegbarem Behälter **19**. In dieser Darstellung wird eine von mehreren Anzünd-/Treibstoffeinheit **8** gezeigt, welche sich in der einteiligen Brennkammer **25** befindet. Die Brennkammer **25** wird von der Brennkammerwand **14** seitlich begrenzt. Die Anzünd-/Treibstoffeinheit **8** beinhaltet eine Anzündeinheit bestehend aus einem Anzünder **16** und einer Anzündmischung **18** und dem eigentlichen gaserzeugenden Treibstoff **1**. Umschlossen wird diese Anzünd-/Treibstoffeinheit **8** von einem Behälter **19**, dessen Wandmaterial und Wandstärke derart ausgelegt ist, daß die Wandung einerseits durch eine Explosion im Inneren des Behälters **19** zerstört wird aber andererseits von außen einer Explosion in einer benachbarten Treibstoff-/Zündeinheit standhält. Das heißt das eine Öffnung des Behälters **19** nur dann erfolgt wenn über einen elektrischen Impuls die Anzündeinheit **3** die gaserzeugende Reaktion des Treibstoffes **1** in Gang gesetzt hat. Der Behälter hat einen sektorförmigen Querschnitt (siehe Figur 2) und wird bei der Montage in die Brennkammer eingelegt und dann bei Bedarf fixiert.
Der Behälter mit seiner Anzünd-/Treibstoffeinheit ist unabhängig von benachbarten Behältern, das heißt, daß dessen Inhalt einzeln gezündet werden kann ohne einen benachbarten Behälter zu beeinflussen. Nach dem Öffnen des Behälters **19** entweicht das Gas über einen Vorfilter **13**, der sich ebenfalls in der Brennkammer **25**, jedoch nicht in dem Behälter, befindet, durch die Brennkammeröffnungen **7**, die sich in der Brennkammerwand **14** befinden, in die Filterkammer. In der gesamten Filterkammer wird das heiße und verschmutzte Gas zuerst über einen Grobfilter **10** und dann über einen Feinfilter **11** gereinigt und gekühlt.
Danach verläßt es den Gasgenerator an den Ausströmöffnungen **12**, welche sich an der Filterkammerwand **15** befinden.

**Figur 2** zeigt einen Schnitt durch die Brennkammer eines erfindungsgemäßen pyrotechnischen Rundgasgenerator mit kuchenförmigen, einlegbaren Behältern. In dieser Schnittdarstellung kann Einblick in die gesamte Brennkammer **25** gewährt werden. Hier befinden sich zwei Anzünd-/Treibstoffeinheiten eine kleinere **8** und eine größere **9**.
Die Brennkammer **25** wird durch die Brennkammerwand **14** seitlich begrenzt. Jede dieser Anzünd-/Treibstoffeinheit **8** und **9** besitzt eine eigene Anzündeeinheit **3** und **4**, die unabhängig voneinander ausgelöst werden können. In dem dargestellten Anwendungsfall sind die Behälter **19** und **20** unterschiedlich groß auch ist die Treibstoffmenge **1** bzw. **2** unterschiedlich. Jede dieser Anzünd-/Treibstoffeinheit befindet sich in einem Behälter **19** bzw. **20**. Diese Behälter haben einen sektorförmigen Schnitt und ergeben zusammen wieder einen Kreis wie die Stücke eines Kuchens. Daher ist es ebenso möglich beliebig viele Behälter in der Brennkammer **25** anzuordnen solange sie alle zusammen wieder einen kreisförmigen Schnitt haben. Wird einer der Behälter durch eine Zündung in seinem Inneren geöffnet, so gelangt das Gas, wenn keine Ablenkbleche den Gasstrom ausrichten, in den gesamten Vorfilter **13** und es können alle Brennkammeröffnungen entlang der ganzen Brennkammerwand **14** genutzt werden, sowie die gesamte Filterkammer.
Wenn die Anzünd-/Treibstoffeinheiten in den Behältern unabhängig voneinander gezündet werden können, hat dies zur Folge, daß je nach Anforderung der Gassack nur leicht, also nur mit dem Gas aus der kleinen Anzünd-/Treibstoffeinheit **8**, mittel, also nur mit dem Gas aus der großen Anzünd-/Treibstoffeinheit **9** oder schwer, also mit dem Gas von beiden Anzünd- /Treibstoffeinheiten **8** und **9** gleichzeitig, aufgeblasen wird. Mit dieser Anordnung wäre es möglich den Druck im Gassack den Anforderungen entsprechend auszulegen. In dem gezeigten Anwendungsbeispiel wäre der Gasgenerator dreistufig. Würde man die Brennkammer mit noch mehr voneinander unabhängigen Anzünd-/Treibstoffeinheiten füllen, so könnte der Gasgenerator mit beliebig vielen Stufen betrieben werden. Ebenso kann durch eine zeitlich versetzte Auslösung der beiden Anzünd-/Treibstoffeinheiten die Aufblasdauer des Gassackes beschleunigt oder verzögert werden.

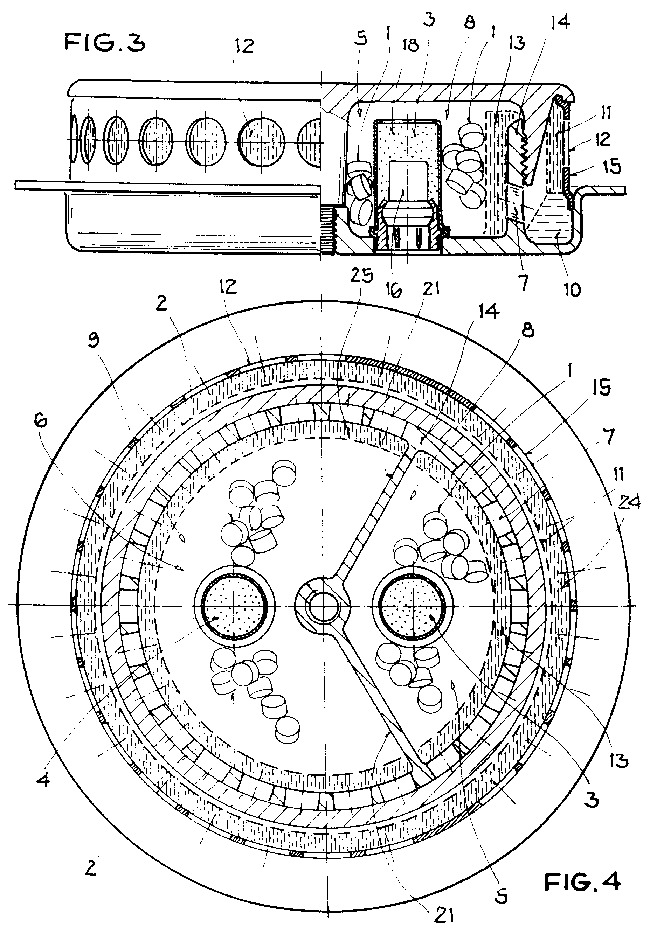

**Figur 3** zeigt einen erfindungsgemäßen pyrotechnischen Rundgasgenerator mit mehreren Brennkammerbereichen. In dieser Darstellung wird ein Teil der einteiligen Brennkammer gezeigt, welche in mehrere Brennkammerbereichen unterteilt ist. Die Unterteilung in mehrere Brennkammerbereiche wird in Figur 4 beschrieben. Ein Brennkammerbereich **5** beinhaltet eine Anzündeinheit **3** bestehend aus einem Anzünder **16** und einer Anzündmischung **18** und dem eigentlichen gaserzeugenden Treibstoff **1**. Auch befindet sich hier der Vorfilter **13**.
Umschlossen wild der Brennkammerbereich von der gemeinsamen kreisförmigen Brennkammerwand **14** und radialen Zwischenwänden **21** (in Figur 4 abgebildet). Das Wandmaterial und die Wandstärke ist derart ausgelegt, daß sie durch eine Explosion im Inneren des Brennkammerbereichs nicht zerstört werden und die Brennkammeröffnungen **7** geöffnet werden. Dagegen bleiben die Brennkammeröffnungen, bei einer Explosion von außen in einem benachbarten Brennkammerbereich, verschlossen (siehe Figur 4). Das heißt der gaserzeugende Treibstoff **1** im Brennkammerbereich wird nur dann gezündet, wenn die dazugehörige Anzündeinheit **3** über einen elektrischen Impuls die gaserzeugende Reaktion des Treibstoffes **1** auslöst. Dann jedoch öffnen sich die Brennkammeröffnungen **7** des Brennkammerbereichs und das Gas entweicht über einen Vorfilter **13**, der sich ebenfalls in dem Brennkammerbereich befindet, in die Filterkammer.
In der Filterkammer wird das heiße und verschmutzte Gas zuerst über einen Grobfilter **10** und dann über einen Feinfilter **11** gereinigt und gekühlt. Danach verläßt es den Gasgenerator an den Ausströmöffnungen **12**, welche sich an der Filterkammerwand **15** befinden.

**Figur 4** zeigt einen Schnitt durch die Brennkammer, die durch radiale Zwischenwände mehrere unabhängige Brennkammerbereiche ausbildet.
In dieser Schnittdarstellung kann Einblick in die gesamte Brennkammer **25** gewährt werden. Hier befinden sich zwei voneinander getrennt Brennkammerbereiche, ein kleinerer **5** und ein größerer **6**. Die gesamte Brennkammer wird durch die Brennkammerwand **14** zur Filterkammer hin begrenzt. Die verschieden große Brennkammerbereiche sind durch radiale Wände **21** voneinander separiert. Diese Zwischenwände **21** können entweder einzeln z.B. in eine Nut im Zentrum und in der Brennkammerwand eingelegt werden oder sie sind bereits v-förmig oder sternförmig angeordnet und werden in die Brennkammer **25** in Halterungen eingelegt. Die Zwischenwände **21** sind derart ausgelegt, daß bei der gaserzeugenden Reaktion in einem Brennkammerbereich der Treibstoff im benachbarten Brennkammerbereich nicht ausgelöst werden kann. Die Brennkammerbereiche **5** und **6** sind unabhängig voneinander.
Das Gas verläßt über die Brennkammeröffnungen **7** an der Brennkammerwand **14** den Brennkammerbereich **5** bzw. **6** und wird in der gesamten Filterkammer **24**, soweit keine Ablenkbleche angebracht sind, gereinigt und gekühlt In dem dargestellten Anwendungsfall sind die Brennkammerbereiche unterschiedlich groß. Auch ist die Treibstoffmenge **1** bzw. **2** unterschiedlich. Das hat zur Folge, daß je nach Anforderung der Gassack nur leicht, also nur mit dem Gas aus dem kleinen Brennkammerbereich, mittel, also nur mit dem Gas aus dem großen Brennkammerbereich oder schwer, also mit dem Gas von beiden Brennkammerbereichen gleichzeitig, aufgeblasen wird. Mit dieser Anordnung wäre es möglich den Druck im Gassack den Anforderungen entsprechend auszulegen. In dem gezeigten Anwendungsbeispiel wären der Gasgenerator dreistufig. Würde man die Brennkammer mit noch weiteren radialen Zwischenwände **21** unterteilen, so könnte der Gasgenerator mit beliebig vielen Stufen betrieben werden. Ebenso kann durch eine zeitlich versetzte Auslösung der beiden Anzünd-/Treibstoffeinheiten die Aufblasdauer des Gassackes beschleunigt oder verzögert werden.

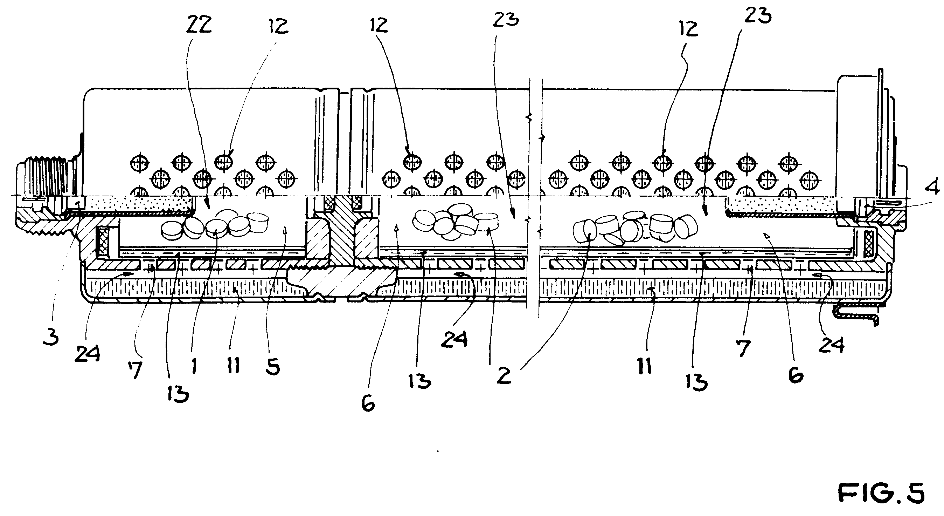

**Figur 5** zeigt einen erfindungsgemäßen pyrotechnischen Rohrgasgenerator mit mehreren Brennkammern, die pro Brennkammer eine eigene, unabhängige Wandung mit den Abströmöffnungen aufweist.
Dieser Rohrgasgenerator bildet zwei voneinander unabhängige Brennkammern **22** und **23** aus. In den beiden Brennkammern **22** und **23** befinden sich unterschiedliche Mengen des gaserzeugenden Treibstoffes **1** und **2**. Auch ragt in jede Brennkammer eine Anzündeeinheit **3** und **4**, deren Anzünder unabhängig voneinander ausgelöst werden können. In der Brennkammer befindet sich weiterhin ein Vorfilter **13**. Jede Brennkammer besitzt eine eigene Brennkammerwand in der sich die Brennkammeröffnungen **7** befinden. Jede der zylinderförmigen Brennkammern ist mit einer eigenen Filterkammer **24** umgeben, in der sich die Filter befinden. Jede Filterkammer ist nach außen hin mit einer eigenen Außenwand, der Filterwand mit den Abströmöffnungen **12**, umschlossen. Bei einem derartigen Aufbau handelt es sich im Prinzip um zwei unabhängige Rohrgasgeneratoren die miteinander verbunden werden **26**. Weiterhin sind die Brennkammern **22** und **23** derart aufgebaut, daß durch die freiwerdende Energie bei der Auslösung der einen der Treibstoff in der anderen Brennkammer nicht gezündet werden kann. Eine Zündung des Treibstoffes ist nur durch den Anzünder in der jeweiligen Brennkammer möglich.
Nach der Zündung des gaserzeugenden Treibstoffes **1** und/oder **2** entweicht das Gas über einen Vorfilter **13** durch die Brennkammeröffnungen **7** in die Filterkammer in der es gereinigt und gekühlt wird. Danach verläßt es über die Ausströmöffnungen **12** den Gasgenerator und gelangt in den Verbraucher z. B. einen Gassack.

Auch bei diesem Anwendungsbeispiel handelt es sich um einen dreistufigen Gasgenerator. Bei der Zündung des Treibstoffes **1** in der kleinen Brennkammer **22** wird ein Gassack nur leicht aufgeblasen. Bei der Zündung des Treibstoffes **2** in der großen Brennkammer **23** wird ein Gassack mittelmäßig aufgeblasen. Bei der Zündung des gesamten Treibstoffes **1** und **2** in der kleinen und großen Brennkammer **22** und **23** wird der Gassack stark aufgeblasen.
Auch bei diesem Aufbau besteht die Möglichkeit noch mehr Brennkammern mit einer Anzündeinheit und einer Treibstoffeinheit im Generator zu integrieren.
Ebenso kann durch eine zeitlich versetzte Auslösung der beiden Anzünd-/Treibstoffeinheiten die Aufblasdauer des Gassackes beschleunigt oder verzögert werden.

## Patentansprüche

1. Anordnung zum mehrstufigen Zünden eines pyrotechnischen Gasgenerators mit einer Brennkammer, insbesondere für passive Rückhaltesysteme in Kraftfahrzeugen, wobei der Gasgenerator mindestens zwei voneinander unabhängig ansteuerbaren Anzündeinheiten (3, 4) und mindestens zwei voneinander unabhängige gaserzeugende Treibstoffeinheiten (1, 2) beinhaltet, **dadurch gekennzeichnet, daß** sich jeweils eine Anzündeinheit (3, 4) und eine Treibstoffeinheit (1, 2) in einem geschlossenen, in die Brennkammer einlegbaren Behälter (19, 20) befindet.

2. Anordnung nach Patentanspruch 1, **dadurch gekennzeichnet, daß** der geschlossene Behälter (19 bzw. 20), bei Auslösung der gaserzeugenden Reaktionen in seinem Inneren, geöffnet wird.

3. Anordnung nach Patentanspruch 1 oder 2, **dadurch gekennzeichnet, daß** der geschlossene Behälter (19 bzw. 20) einen sektorförmigen Querschnitt hat.

4. Anordnung nach Patentanspruch 1, 2 oder 3, **dadurch gekennzeichnet, daß** sich mindestens zwei Behälter (19, 20) in der Brennkammer befinden.

5. Anordnung nach Patentanspruch 3 oder 4, **dadurch gekennzeichnet, daß** alle geschlossenen Behälter mit einem sektorförmigen Querschnitt in der Brennkammer (25) angeordnet einen geschlossenen Kreis bilden.

6. Anordnung zum mehrstufigen Zünden eines pyrotechnischen Gasgenerators mit einer Brennkammer, insbesondere für passive Rückhaltesysteme in Kraftfahrzeugen, wobei der Gasgenerator mindestens zwei voneinander unabhängig ansteuerbaren Anzündeinheiten (3, 4) und mindestens zwei voneinander unabhängige gaserzeugende Treibstoffeinheiten (1, 2) beinhaltet, **dadurch gekennzeichnet, daß** die Brennkammer durch Zwischenwände (21) in mindestens zwei voneinander unabhängige, abgeschlossene Brennkammerbereiche (5, 6) unterteilt ist, die jeweils eine Anzündeinheit (3, 4) und eine Treibstoffeinheit (1, 2) beinhalten.

7. Anordnung zum mehrstufigen Zünden eines pyrotechnischen Gasgenerators mit mindestens zwei Brennkammern und mindestens zwei Filterkammer, insbesondere für passive Rückhaltesysteme in Kraftfahrzeugen, wobei der Gasgenerator mindestens zwei voneinander unabhängig ansteuerbaren Anzündeinheiten (3, 4) und mindestens zwei voneinander unabhängige gaserzeugende Treibstoffeinheiten (1, 2) beinhaltet, **dadurch gekennzeichnet, daß** sich im Gasgenerator mindestens zwei eigenständige Brennkammern (22, 23) befinden, die jeweils eine Anzündeinheit (3, 4) und eine Treibstoffeinheit (1, 2) beinhalten und die von mindesten zwei unabhängigen Wandungen (15) mit den Abströmöffnungen (12) umgeben sind.

8. Anordnung nach einem der vorangegangenen Patentansprüche, **dadurch gekennzeichnet, daß** nur eine der Treibstoffeinheiten allein oder mindestens zwei Treibstoffeinheiten (1, 2) gleichzeitig oder zeitlich versetzt von der zugehörigen Anzündeeinheit(3, 4) ausgelöst werden.
